# EUROPEAN PATENT APPLICATION

(11) **EP 3 624 038 A1**
(43) Date of publication of application: **18.03.2020**
(21) Application number: 18194675.7
(22) Date of filing: 14.09.2018
(51) Int. Cl.: G06Q 20/04, G06Q 20/02, G06Q 20/32, G06Q 20/20, G06Q 30/04

(54) **IMPROVEMENTS RELATING TO TRANSMISSION OF INTERACTION DATA**

(71) Applicant: Mastercard International Incorporated, Purchase NY 10577 (US)
(72) Inventor: TONER, Stephen, Dublin (IE); BYRNE, Rob, Wicklow (IE); MCBENNETT, Pat, Dublin (IE); ELDER, Stephen, Dublin (IE)
(74) Representative: Richardson, Mark Jonathan

(57) **Abstract**

There is provided a computer-implemented method of providing data relating to an interaction carried out between a first entity and a second entity to a third party server. The method is implemented by an interaction processing server remote from the first entity, second entity and third party server. The method comprises: receiving, from the first entity, interaction data relating to the interaction and auxiliary data associated with the interaction; storing, in a memory of the interaction processing server, the received interaction and auxiliary data; and transmitting, subsequent to successful authentication of the interaction, the interaction data to the third party server. The method further comprises transmitting to the third party server, via a communications channel established between the interaction processing server and the third party server, the auxiliary data relating to the interaction, for incorporation into an augmented interaction report subsequently provided to the second entity by the third party server.

## Description

### TECHNICAL FIELD

The present invention relates to a system and method for the transmission of interaction data to be used in generating a report relating to the interaction, and transmission of auxiliary data associated with the interaction for augmentation of the generated interaction report.

### BACKGROUND

Bank statements are typically used by banking institutions as a method of summarising basic details of a user's payment transactions that have been carried out using a particular payment device (e.g. a payment card) issued by a bank.

Payment transactions are increasingly being carried out electronically, whereby users purchase goods and services online by entering their payment card details and authentication information at a merchant's online payment gateway. This data is then provided to the issuer of the payment card to authenticate the user and their purchase, and to ensure that the transaction data provided is valid and legitimate. Systems which facilitate such electronic transactions for merchants are generally referred to as e-commerce payment systems.

Along with the increasing reliance on digital services such as on-the-go banking and e-commerce payments, the card issuing banks have also made their bank statements accessible in digital format to the users. Typically, this has taken the form of a digital bank statement that can be accessed by the user by logging into their bank's website, or via a dedicated banking application that operates on the user's mobile device.

Even when displayed digitally, bank statement information still tends to remain generally static, and only limited information relating to a particular transaction would usually be provided in a bank statement, for example, a digital bank statement would usually only include the payment amount, and some details relating to the transaction (such as the payment reference, and perhaps the location of the transaction). This tends to result in many customer care calls from users requesting further details or clarifications regarding their payment transactions.
It is an aim of the present invention to address disadvantages associated with the prior art.

### SUMMARY OF THE INVENTION

According to an aspect of the present invention, there is provided a computer-implemented method of providing data relating to an interaction carried out between a first entity and a second entity to a third party server. The method is implemented by an interaction processing server remote from the first entity, second entity and third party server. The method comprises: receiving, from the first entity, interaction data relating to the interaction and auxiliary data associated with the interaction; storing, in a memory of the interaction processing server, the received interaction and auxiliary data; and transmitting, subsequent to successful authentication of the interaction, the interaction data to the third party server. The method further comprises transmitting to the third party server, via a communications channel established between the interaction processing server and the third party server, the auxiliary data relating to the interaction, for incorporation into an augmented interaction report subsequently provided to the second entity by the third party server.

An unaugmented interaction report would normally merely comprise the interaction data relating to a particular interaction, without providing any further details about the interaction or its result. However, augmentation of the interaction report using the additional auxiliary data provides a centralised mechanism which enables the entity receiving the augmented interaction report to access all appropriate, relevant information relating to an interaction. Such additional information would usually otherwise need to be obtained in other ways, and potentially via different communications pathways between the receiving entity and other parties. This allows the receiving entity to easily maintain control of any follow-up related interactions. Advantageously, the above-described method also allows the auxiliary data to be presented (in association with the corresponding interaction data) in a flexible, easily-customisable manner by the third party server.

Optionally, the interaction data comprises an indicator that the auxiliary data is available upon request by the third party server. This advantageously alerts the third party server to the fact that, for a particular interaction, auxiliary data is available for provision by the interaction processing server. This is particularly useful in cases where not all interactions necessarily have associated auxiliary data or in cases where not all entities/parties are necessarily able to accept and/or process this auxiliary data. This therefore provides an 'on-demand' mechanism for transmission of auxiliary data, and also avoids the interaction processing server potentially overloading or overwhelming the third party server with data relating to a particular interaction that may not be required, or may only be required at a specific time or in response to a specific request from the second entity.

In some cases, transmission of the auxiliary data from the interaction processing server to the third party server is carried out in response to receiving an auxiliary data request from the third party server. Alternatively, transmission of the auxiliary data may be carried out automatically by the interaction processing server once it has completed the processing and authentication of the corresponding interaction. The former method allows the third party server to minimise the amount of data that is received from the interaction processing server, and which therefore needs to be stored by the third party server. The latter method advantageously reduces the amount of active data processing and requests for data that need to be carried out by the third party server, reducing the overall data processing load for the third party server.

According to another aspect of the present invention, there is provided a computer-implemented method of providing an augmented interaction report relating to an interaction carried out between a first entity and a second entity. The augmented interaction report is provided to the second entity by a third party server. The method comprises: receiving, from a remote interaction processing server, interaction data relating to the interaction; requesting, from the interaction processing server, auxiliary data associated with the interaction; receiving, from the interaction processing server and via a communications channel between the interaction processing server and the third party server, auxiliary data associated with the interaction; storing, in a memory of the third party server, the received interaction data and auxiliary data; and providing, in response to a request from the second entity, an augmented interaction report comprising the interaction data in association with the auxiliary data.

According to another aspect of the present invention, there is provided a computer-implemented method of providing an augmented interaction report relating to an interaction carried out between a first entity and a second entity. The augmented interaction report is provided to the second entity by a third party server. The method comprises: receiving, from a remote interaction processing server, interaction data relating to the interaction; providing, in response to a request from the second entity, an augmented interaction report comprising interaction data and an indication that auxiliary data associated with the interaction is available upon request; and receiving, from the second entity, a request for auxiliary data associated with the interaction. The method further comprises requesting, from the interaction processing server, the auxiliary data associated with the interaction; and providing, upon receipt of the auxiliary data from the interaction processing server via a communications channel between the interaction processing server and the third party server, the auxiliary data to the second entity.

The above two methods effectively provide alternate mechanisms where the third party server may provide the augmented interaction report to the second entity. In the former method, the second entity may take a less active role, merely requesting an interaction report from the third party server (which has already augmented the report using the auxiliary data). Alternatively, as in the latter method, the second entity may take a more active role - options for viewing auxiliary data are provided by the third party server but it is the second entity that decides whether and when to access and utilise the data. The latter method involves a greater amount of data processing being carried out on the part of the third party server, as the server needs to be reactive to the requests from the second entity for auxiliary data relating to one or more interactions. On the other hand, however, the latter method does avoid any potential overwhelming of the second entity with an excess of auxiliary data that the second entity may not be interested in.

In some cases, the interaction is a payment transaction. In this scenario, the first entity would correspond to a merchant and the second entity would correspond to a customer who is making a payment to the merchant in return for one or more products and/or services.

In such cases, the third party server may correspond to an issuer of a payment device used by the customer during the payment transaction, and the augmented interaction report is a digital bank statement provided by the issuer in relation to the payment device. For example, the customer may be utilising a payment card issued by a particular banking or financial institution to carry out the transaction in question. As a customer would naturally access and check their bank statements to obtain transaction information, it would be advantageous to provide any additional auxiliary data to this customer as part of the bank statement and in association with the corresponding transaction information.

The interaction processing server may correspond to a remote server or server network that provides an intermediary functionality between the issuer and the financial institution associated with the merchant (i.e. the acquirer). This interaction processing server processes and authenticates the transactions carried out by customers with the merchant, and provides the authenticated payment transaction data to the issuer for subsequent verification and settlement purposes.

Optionally, the augmented interaction report is provided to the second entity via a banking application installed on a mobile device of the second entity. Providing augmented bank statement to a customer via their mobile banking application advantageously centralises all interactions that the customer must carry out in order to view details of, and additional information associated with, a particular transaction. This greatly simplifies the process of obtaining information that a customer must go through, and also ensures that a particular issuer can easily provide a comprehensive set of data associated with a particular transaction.

In some cases, the payment transaction is carried out via a payment application operating on a mobile device of the second entity. This may or may not be the same mobile device upon which the previously-mentioned banking application is installed and accessed. For example, a customer may have multiple mobile devices and may view their bank statements and carry out payment transactions on-the-go on different ones of these devices, depending on their personal preference. Flexibility and ease of data access by the customer is thereby enabled.

Optionally, the auxiliary data comprises one or more of the following: a transaction receipt, product warranty details, images of the product or service purchased, details associated with the product or service purchased, product delivery details, one or more offers associated with the product or service purchased. Various alternative options for auxiliary data exist, and may depend on the purpose of the transaction, the product(s) and/or service(s) purchases, as well as the possible preferences of the issuer for the types of auxiliary data that they would like to utilise when augmenting the bank statements.

According to another aspect of the present invention, there is provided an interaction processing server configured to provide, to a third party server, data relating to an interaction carried out between a first entity and a second entity. The interaction processing server is remote from the first entity, second entity and third party server. The interaction processing server comprises: an input configured to receive, from the first entity, interaction data and auxiliary data associated with the interaction; a processor configured to process the received interaction and auxiliary data; a memory configured to store the received interaction and auxiliary data; and an output configured to transmit to the third party server, subsequent to successful authentication of the interaction, the interaction data and the auxiliary data relating to the interaction, for incorporation into an augmented interaction report subsequently provided to the second entity by the third party server.

Optionally, the output comprises a dedicated interface and communication channel configured to transmit the auxiliary data to the third party server. For example, the interaction processing server may maintain a dedicated API with which the third party server may communicate so as to request and receive auxiliary data. This API may be accessible only by selected parties - i.e. the third party server may need to register or enter into an agreement with the interaction processing server in order to utilise the API to obtain auxiliary data.

According to a further aspect of the present invention, there is provided a third party server configured to provide an augmented interaction report relating to an interaction carried out between a first entity and a second entity, the augmented interaction report being provided to the second entity. The third party server comprises: an input configured to receive, from a remote interaction processing server, interaction data and auxiliary data relating to the interaction; a processor configured to process the received interaction data and auxiliary data; and an output configured to provide, to the second entity, the augmented interaction report comprising the interaction data in association with the auxiliary data.

Optionally, the third party server is configured to output, to the interaction processing server, a request for the auxiliary data. Alternatively, the interaction processing server may simply provide the auxiliary data to the third party, via a simple 'push' of auxiliary data to the third party server - without receiving a triggering request from the third party server to do so.

In some cases, the third party server is configured to output the request for auxiliary data to the interaction processing server in response to receipt of a request for auxiliary data from the second entity. For example, the augmented interaction report may initially simply contain an indication that auxiliary data is available upon request, rather than the auxiliary data itself. This advantageously means that the second entity may decide when and under what conditions the auxiliary data are provided to them by the third party server. This avoids potentially providing unnecessary or unwanted data to the second entity, and also reduces the amount of data processing that needs to be carried out initially when generating the augmented interaction report; the amount of data that is transmitted initially from the third party server to the second entity is therefore also reduced.

According to another aspect of the present invention, there is provided a first interaction entity configured to carry out an interaction with a second entity, the first interaction entity comprising a processor programmed with instructions that when executed cause the processor to: generate interaction data and auxiliary data associated with the interaction; and provide, to a remote interaction processing server, the interaction data and auxiliary data for subsequent provision to a third party server.

According to another aspect of the present invention, there is provided a mobile device configured to provide an augmented interaction report relating to an interaction carried out between a first entity and a second entity, the mobile device comprising a processor programmed with instructions that when executed cause the processor to: receive the augmented interaction report from a third party server; and to provide the augmented interaction report to the second entity.

It will be appreciated that similar benefits and advantages will be associated with the servers and systems described above and implementing the methods, as are associated with the methods themselves.

Within the scope of this application it is expressly intended that the various aspects, embodiments, examples or alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 is a schematic block diagram of a distributed system in which it is envisioned that embodiments of the invention will be utilised;
Figure 2 is a schematic block diagram highlighting components of the user's mobile device, the merchant, the remote authentication server and the card issuing bank, and interactions that make take place between these entities;
Figure 3 is a flow chart providing an overview of steps carried out in the method according to an embodiment of the invention; and
Figures 4a and 4b illustrate an example of an augmented digital bank statement that may be presented to a user in an embodiment of the invention.

Where the figures laid out herein illustrate embodiments of the present invention, these should not be construed as limiting to the scope of the invention. Where appropriate, like reference numerals will be used in different figures to relate to the same structural features of the illustrated embodiments.

### DETAILED DESCRIPTION

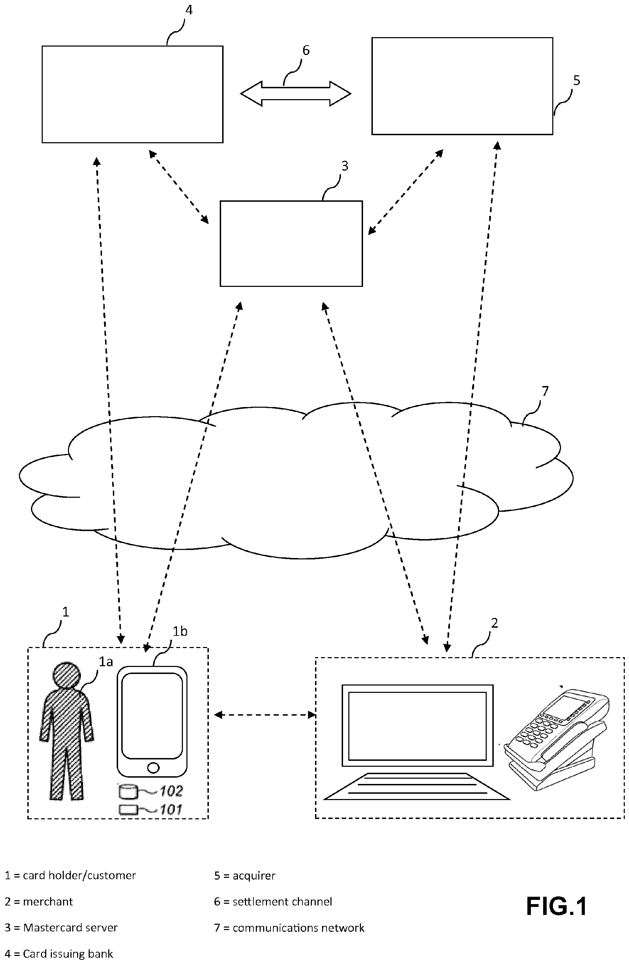

**Figure 1** shows an exemplary transaction system in which embodiments of the invention may be used.

A user 1a is provided with a payment device 1b - this may be for example a mobile computing device such as a mobile phone or laptop acting as a proxy for a payment card or other transaction device. The cardholder 1a and their mobile computing device 1b will also be collectively referred to subsequently in this description as a 'cardholder' using reference numeral 1 for ease of explanation. The mobile device has at least one processor 101 and at least one memory 102 together providing at least one execution environment, as described further below.

These devices have firmware and applications (for example, a digital wallet application service) run in at least one Rich execution environment (REE) with an operating system such as iOS, Android or Windows. Payment devices will typically be equipped with means to communicate with other elements of a payment infrastructure. These communication means may comprise an antenna and associated hardware and software for data communications via a mobile network or local wireless networking using 802.11 protocols or any combination of the above. The communication means may also incorporate hardware and software to support NFC communications for contactless interactions if so desired.

In the illustrated transaction system, payment transactions are carried out between the cardholder 1 and a merchant 2. These payment transactions may take the form of standard 'brick and mortar' transactions - namely, those transactions that are carried out at the merchant's establishment, for example using a Point-of-Sale (POS) device. Alternatively, the cardholder 2 may carry out e-commerce transactions with the merchant 2 - i.e. payment transactions involving the cardholder's mobile device 1b and a website of the merchant that is accessed by the user 1a via their mobile device 1b. During such e-commerce transactions, and usually upon selection of a digital payment mechanism (such as a digital wallet) by the user at the website, a prompt is provided to the user to authenticate the transaction; this authentication may be carried out using their mobile device 1b. The payment data generated as part of the transaction is subsequently passed to the merchant 2, or to a payment gateway associated with the merchant 2.

In this system, a remote 'transaction processing' server (or server network) 3 is also provided, in communication with an issuer 4 and an acquirer 5. The issuer 4 is the bank or any other financial institution that issued the payment card in question to the user 1a, whilst the acquirer 5 provides transaction processing services to the merchant 2. Interactions between the issuer 4 and acquirer 5 are routed via the remote server 3, thereby enabling a merchant 2 associated with one particular financial institution (acquirer 5) to accept payment transactions from a cardholder 1 using a payment card that is associated with a different financial institution (acquirer 5).

A typical transaction between the entities in this transaction system can be divided into two main stages: authorisation and settlement. After the cardholder 1 has carried out and authenticated their transaction, details of the payment card and the transaction are sent to the issuer 4, via the acquirer 5, and the remote server 3 to authorise the transaction. Should the transaction be considered abnormal by the issuer 4, the cardholder 1 may be required to undergo a verification process to identify their identity and the details of the transaction. Once the verification process is complete, the transaction is authorised.

On completion of the transaction between the cardholder 1 and the merchant 2, the transaction details are submitted by the merchant 2 to the acquirer 5 for settlement. The transaction details are then routed to the relevant issuer 4 by the acquirer 5 via the remote server 3. Upon receipt of these transaction details, the issuer 4 provides the settlement funds to the remote server 3, which in turn forwards these funds to the merchant 2 via the acquirer 5.

Separately, the issuer 4 and the cardholder 1 settle the payment amount between them. In return, a service fee is paid to the acquirer 5 by the merchant 2 for each transaction, and an interchange fee is paid to the issuer 4 by the acquirer 5, for example via settlement channel 6, in return for the settlement of funds.

In the case of e-commerce transactions, the mobile device 1b may interact with the merchant 2 via a communications network 7, such as a public internet.

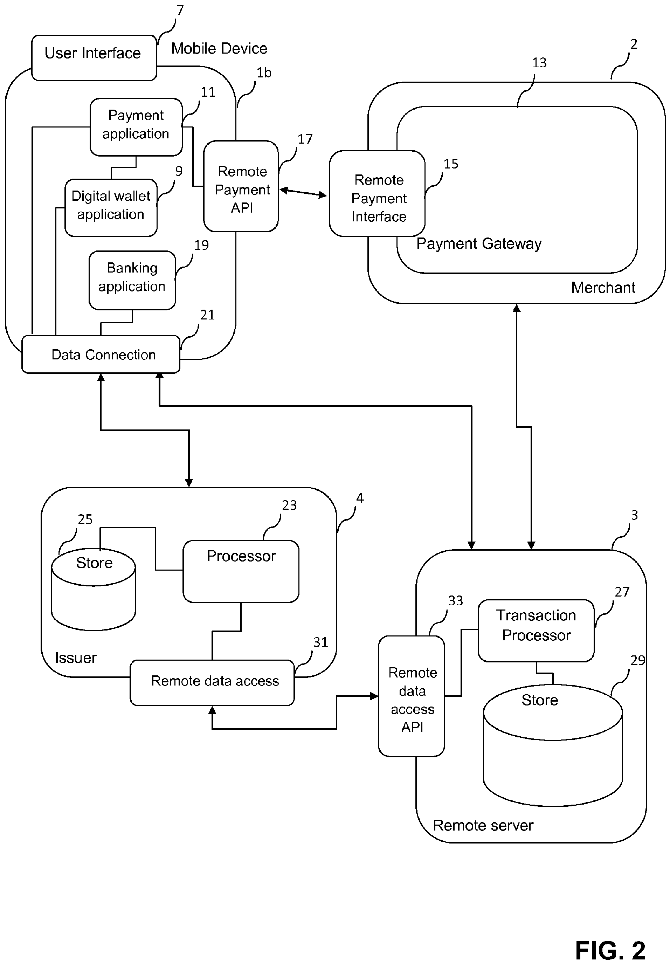

**Figure 2** shows in more detail functional elements of the entities present in the system of Figure 1 which are suitable for implementing embodiments of the present invention, and particularly in the case of e-commerce (online) transactions, namely the user's mobile device 1 b, the merchant 2, the remote server 3 and the issuer 4.

The mobile device 1b comprises a user interface 7 suitable for user interaction during the transaction process, a digital wallet application 9, and a mobile payment application 11 which are both implemented in the main operating system of the mobile device 1. The digital wallet application 9 stores user details and information relating to frequently-used payment cards, and is in operative communication with the mobile payment application 11; the mobile payment application 11 provides the mobile payment functionality and is actively involved in the data processing associated with such payment transactions. The mobile payment application 11 may comprise multiple sub-modules (not shown) which each carry out different tasks during the transaction interactions.

In order to carry out an online e-commerce transaction, the digital wallet application 9 provides payment data to the merchant 2, and specifically to an online payment gateway 13 associated with the merchant 2. This provision of payment data may be carried out via a remote payment interface 15 and the mobile device may comprise a corresponding remote payment API 17 via which instructions and transaction data are transmitted to the remote payment interface 15. In some cases, the communication of transaction data between the mobile device 1b and the merchant 2 may be facilitated by the remote server 3, which may communicate directly with the online payment gateway 13 via the remote payment interface 15, or indirectly via communication with the merchant 2.

The mobile device 1b further comprises a banking application 19 via which the cardholder 1 may communicate with the issuer 4 and obtain information relating to transactions that have been carried out with the payment card. For example, the banking application 19 may be updated with transaction information from the issuer 4 via a data connection 21, and thereby may enable the cardholder 1 to display this transaction information on a screen on their mobile device 1b, for example in the form of digital bank statements.

The issuer 4 comprises one or more processors 23 in communication with one or more data stores 25 (although for the purposes of clarity, only one of each component is shown in Figure 2). Data relating to each payment card or payment device issued by the issuer 4 may be stored in the data store 25, in association with information relating to the corresponding cardholder 1 of the relevant payment card, as well as information relating to transactions carried out by the cardholder 1 involving their payment card. This allows the issuer 4 to verify the identity of the user 1 and of a transaction carried out by that cardholder 1 if necessary, as well as to provide transaction information and history to the cardholder 1 (if desired) in the form of digital bank statements.

Similarly, the remote server 3 also comprises one or more transaction processors 27 in communication with one or more data stores 29 (although again, for clarity purposes, only one of each component is shown in Figure 2). Data relating to transactions, which is provided by the merchant 2 to the remote server 3, may be processed by the transaction processor 27 and stored in the associated data store 29. This data is used by the remote server 3 to authenticate of the transaction before transaction data is forwarded to the issuer 4 for subsequent settlement. Both the remote server 3 and the issuer 4 therefore also comprise means for data communication - for example, the issuer 4 may comprise a remote data access interface 31 and the remote server 3 may comprise a corresponding remote data access API 33 as illustrated in Figure 2.

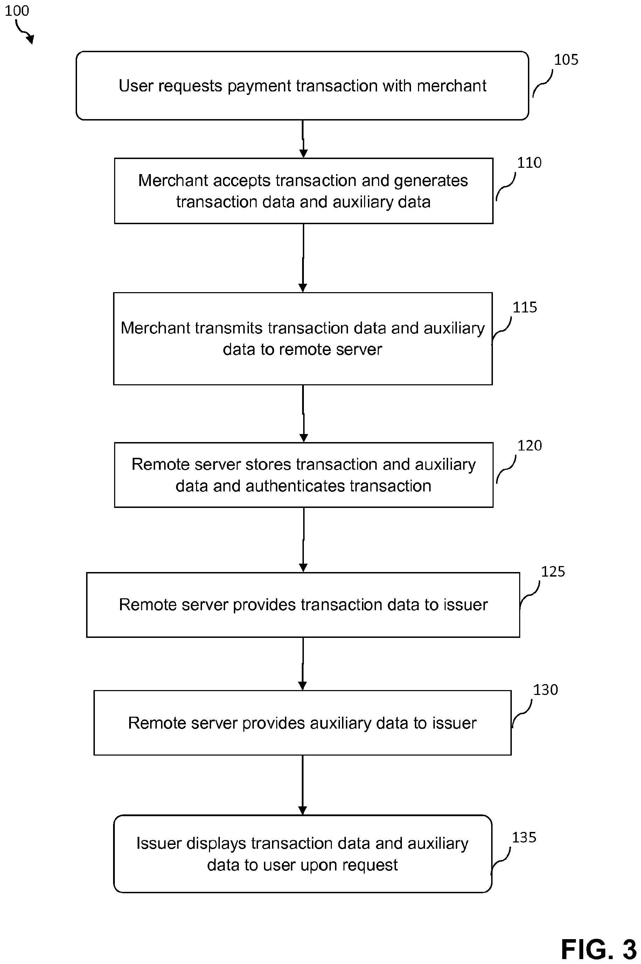

**Figure 3** illustrates the process flow 100 of a transaction according to an embodiment of the present invention.

The process 100 begins at step 105 with the cardholder 1 initiating a payment transaction with the merchant 2, and providing user and payment card details to the merchant 2 to enable subsequent verification and approval of the transaction. As previously mentioned, this may involve the cardholder 1 interacting with a POS of the merchant 2 in-store, or it may be carried out online via data communications between the user's mobile device 1b and an online payment gateway 13 associated with the merchant 2.

Subsequently, once the necessary verification has been successfully carried out, the merchant 2 accepts and approves the transaction request at step 110. Transaction data is then generated based on the payment and user details provided by the cardholder 1 in the previous step. This transaction data is then forwarded in step 115 to the remote server 3 for authentication, and onward provision to the issuer 4. This transaction data will include details of the transaction such as the cost of the purchased item or service. It will also include details of the payment card, such as a tokenized value of the personal account number or PAN associated with the payment card, the expiry date of the payment card, and cryptographic data generated as part of the transaction process (for example, by the mobile payment application 11 on the mobile device 1b). User details (for example, identification information relating to the user 1a) may also be included as part of the forwarded transaction data.

In addition, as part of this step, the merchant 2 is arranged to provide relevant auxiliary data to the remote server 3 in association with the provided transaction data. This auxiliary data is related to the transaction in question, and may include one or more of the following items (although it will be appreciated that this list is non-exhaustive): receipts generated as a confirmation of the transaction being effected by the merchant 2; product warranty details associated with the purchased item(s); delivery details of the purchased item(s); additional information and details relating to the purchased item(s) or service(s); travel information (for example, in the event that the purchased item corresponds to a holiday booking, the auxiliary data may comprise flight details and accommodation information).

Once the transaction data and the associated auxiliary data have been received by the remote server 3 from the merchant 2, the remote server 3 is configured to authenticate the transaction in step 120, for example by validating cryptographic transaction data. As part of this process, the remote server 3 also stores the transaction data together with the associated auxiliary data (for example, in the data store 29).

Once authentication of the transaction has been carried out by the remote server 3, the relevant transaction data is forwarded to the issuer 4 by the remote server 3 in step 125 for settlement.

In addition, the remote server 3 also forwards to the issuer in step 130 the auxiliary data associated with each set of transaction data. This auxiliary data is then used by the issuer 4 in step 135 to augment or enhance the digital bank statements that are generated as a matter of course by the issuer 4 based on the received transaction data and provided to the cardholder 1 upon request, whereby the augmentation takes the form of displaying the auxiliary data in association with the appropriate transaction data entry in the digital bank statement.

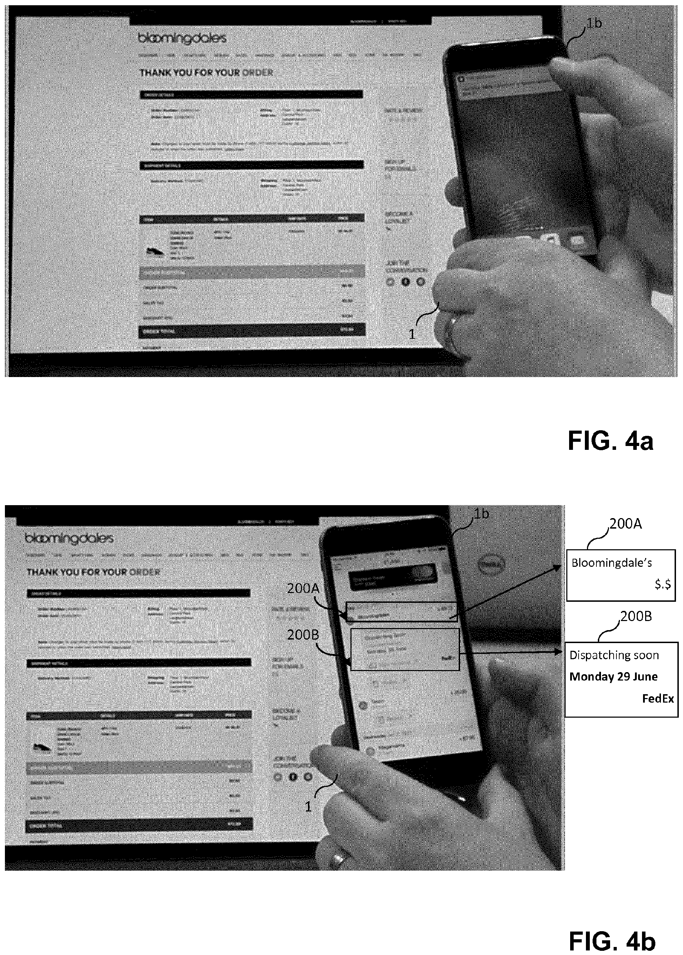

An example of an augmented digital bank statement generated using the above-described process is presented in **Figures 4a and 4b****.**

In the illustrated example, as may be seen from **Figure 4a****,** the cardholder 1 has successfully purchased a product (in this case, a pair of shoes) from a merchant ('Bloomingdales') - in other words, the transaction has been approved by the merchant 2, authenticated by the remote server 3, and the relevant transaction data and auxiliary data (which in this case correspond to delivery information about the shoes, such as time, date and delivery entity) have been provided to the issuer 4 for generation of an augmented digital bank statement. **Figure 4b** illustrates a specific example of how the augmented digital bank statement may be displayed to the cardholder 1 - via the banking application 19 on their mobile device 1b. As may be seen from that figure, the displayed digital bank statement includes an entry 200A that specifies the merchant 2 ('Bloomingdales'), and the transaction amount, along with an entry 200B comprising associated auxiliary data corresponding to the delivery details of the purchased item (i.e. the status of the order Dispatching Soon', the estimated date of delivery, and a link to the delivery entity 'FedEx' which will allow the user to track their product's delivery progress). The cardholder 1 is able to immediately ascertain, upon viewing the augmented bank statement, the status of the purchased item and may also interact with the augmented digital bank statement (for example by clicking on the provided link to track their product).

This ability to provide augmented digital bank statements which comprise a combination of transaction data in association with corresponding relevant auxiliary data enables a third party entity (such as an issuer 4) to provide dynamic, interactive and detailed purchase information directly to the cardholders. Enhancing digital bank statements by the use of auxiliary data means that issuers can ensure that cardholders are e provided with up-to-date information relating to their transactions, and can also allow cardholders to interact with this data in a beneficial way. Effectively, incorporating auxiliary data into the digital bank statements to augment and enhance them enables relevant information relating to a particular transaction to be provided centrally to the cardholder 1 by one entity (the issuer 4). This simplifies subsequent interactions of the cardholder 1 in relation to the transaction.

Returning briefly to a discussion of step 130 of the process 100 illustrated in **Figure 3****,** it is noted that various mechanisms may be utilised by the remote server 3 for provision of the auxiliary data to the issuer 4.

In one example embodiment, it is envisioned that the issuer 4 may automatically (and by default) actively request that the relevant associated auxiliary data be provided by the remote server 3 to the issuer 4 once the corresponding transaction data has been received. In other words, the receipt of the transaction data may serve as a trigger for auxiliary data to be requested by the issuer 4 from the remote server 3. This may be facilitated via the provision of an indicator that is incorporated within, or associated with, the transaction data that is transmitted to the issuer 4 by the remote server 3. This indicator will inform the issuer 4 that auxiliary data is available for request from the remote server 3. This request for, and subsequent provision of, the auxiliary data may be carried out via a (dedicated, access-controlled) communications channel that is established between the issuer's remote data access interface 31 and the remote server's remote data access API 33. The requested auxiliary data may be stored by the issuer 4 (for example in data store 25) until it is required for augmentation of a digital bank statement for display to the user 1. This option is advantageous as it provides all of the required data centrally, and minimises the amount of interaction and wait time that the cardholder 1 must undergo in order to obtain the desired information. In addition, providing a dedicated API 33 for the request of auxiliary data allows the parameters and conditions surrounding the access of auxiliary data to be controlled by the remote server 3 (if so desired).

Alternatively, the issuer 4 may only request the auxiliary data from the remote server 3 on an on-demand basis - for example, only when it is desired by the cardholder 1 for the auxiliary date to be displayed would the issuer 4 communicate with the remote server's dedicated remote data access API 33 to request the relevant auxiliary data associated with one or more transactions. For example, instead of enhancing the digital bank statement with the auxiliary data before display of the bank statement to the user, the issuer 4 could merely include a clickable link or another selectable option in the digital bank statement to indicate to the cardholder 1 that auxiliary data relating to the transaction is available for provision. If the cardholder 1 then clicks on the link or selects the option to view the auxiliary data, the issuer 4 can then communicate with the remote server's API 33 to request transmission of the appropriate auxiliary data. This option is advantageous as it ensures that only relevant information is provided to the cardholder 1, and that this information is provided only when desired by the cardholder 1. This minimises the data transmission burden on both the remote server 3 and the issuer 4. By adopting this option, the issuer 4 also minimises the amount of auxiliary data that needs to be stored in its own data store 25, and furthermore, need not concern itself unduly with data protection protocols.

As a further alternative, it is envisioned that the issuer 4 takes on a more passive role in the provision of auxiliary data - i.e. the issuer 4 does not need to actively request the auxiliary data from the remote server 3. Instead, an agreement may be in place between the issuer 4 and the remote server 3, such that the remote server 3 is configured to automatically 'push' the auxiliary data to the issuer 4, for example, as part of the remote server's process of providing the authenticated transaction data to the issuer 4. This reduces the amount of communication 'calls' that the issuer 4 needs to make to the remote server 3, and hence also reduces the processing burden on the issuer 4.

Many modifications may be made to the above examples without departing from the scope of the present invention as defined in the accompanying claims.

## Claims

1. A computer-implemented method of providing, to a third party server, data relating to an interaction carried out between a first entity and a second entity, the method being implemented by an interaction processing server remote from the first entity, second entity and third party server, the method comprising:
receiving, from the first entity, interaction data relating to the interaction and auxiliary data associated with the interaction;
storing, in a memory of the interaction processing server, the received interaction and auxiliary data;
transmitting, subsequent to successful authentication of the interaction, the interaction data to the third party server; and
transmitting to the third party server, via a communications channel established between the interaction processing server and the third party server, the auxiliary data relating to the interaction, for incorporation into an augmented interaction report subsequently provided to the second entity by the third party server.

2. The method of claim 1, wherein the interaction data comprises an indicator that the auxiliary data is available upon request by the third party server.

3. The method of claim 2, wherein the second transmitting step comprises:
transmitting the auxiliary data to the third party server in response to receiving an auxiliary data request from the third party server.

4. A computer-implemented method of providing, by a third party server, an augmented interaction report relating to an interaction carried out between a first entity and a second entity, the interaction report being provided to the second entity and the method comprising:
receiving, from a remote interaction processing server, interaction data relating to the interaction;
requesting, from the interaction processing server, auxiliary data associated with the interaction;
receiving, from the interaction processing server and via a communications channel between the interaction processing server and the third party server, auxiliary data associated with the interaction;
storing, in a memory of the third party server, the received interaction data and auxiliary data; and
providing, in response to a request from the second entity, an augmented interaction report comprising the interaction data in association with the auxiliary data.

5. A computer-implemented method of providing, by a third party server, an augmented interaction report relating to an interaction carried out between a first entity and a second entity, the augmented interaction report being provided to the second entity and the method comprising:
receiving, from a remote interaction processing server, interaction data relating to the interaction;
providing, in response to a request from the second entity, an augmented interaction report comprising interaction data and an indication that auxiliary data associated with the interaction is available upon request;
receiving, from the second entity, a request for auxiliary data associated with the interaction;
requesting, from the interaction processing server, the auxiliary data associated with the interaction; and
providing, upon receipt of the auxiliary data from the interaction processing server via a communications channel between the interaction processing server and the third party server, the auxiliary data to the second entity.

6. The method of any preceding claim, wherein the interaction is a payment transaction.

7. The method of claim 6, wherein the third party server corresponds to an issuer of a payment device used during the payment transaction, and the augmented interaction report is a digital bank statement provided by the issuer in relation to the payment device.

8. The method of claim 6 or claim 7, wherein the augmented interaction report is provided to the second entity via a banking application installed on a mobile device of the second entity.

9. The method of any of claims 6 to 8, wherein the payment transaction is carried out via a payment application operating on a or the mobile device of the second entity.

10. The method of any of claims 6 to 9, wherein the auxiliary data comprises one or more of the following: a transaction receipt, product warranty details, images of the product or service purchased, details associated with the product or service purchased, product delivery details, one or more offers associated with the product or service purchased.

11. An interaction processing server configured to provide, to a third party server, data relating to an interaction carried out between a first entity and a second entity, the interaction processing server being remote from the first entity, second entity and third party server and comprising:
an input configured to receive, from the first entity, interaction data and auxiliary data associated with the interaction;
a processor configured to process the received interaction and auxiliary data;
a memory configured to store the received interaction and auxiliary data; and
an output configured to transmit to the third party server, subsequent to successful authentication of the interaction, the interaction data and the auxiliary data relating to the interaction, for incorporation into an augmented interaction report subsequently provided to the second entity by the third party server.

12. The interaction processing server of claim 11, wherein the output comprises a dedicated interface and communication channel configured to transmit the auxiliary data to the third party server.

13. A third party server configured to provide an augmented interaction report relating to an interaction carried out between a first entity and a second entity, the augmented interaction report being provided to the second entity, the third party server comprising:
an input configured to receive, from a remote interaction processing server, interaction data and auxiliary data relating to the interaction;
a processor configured to process the received interaction data and auxiliary data; and
an output configured to provide, to the second entity, the augmented interaction report comprising the interaction data in association with the auxiliary data.

14. The server of claim 13, wherein the third party server is configured to output, to the interaction processing server, a request for the auxiliary data.

15. The server of claim 14, wherein the third party server is configured to output the request for auxiliary data to the interaction processing server in response to receipt of a request for auxiliary data from the second entity.
